# EUROPEAN PATENT APPLICATION

(11) **EP 3 901 330 A1**
(43) Date of publication of application: **27.10.2021**
(21) Application number: 19898899.0
(22) Date of filing: 18.11.2019
(51) Int. Cl.: C25B 9/00, C25B 1/02, C25B 11/03, C25B 11/04, C25B 11/12

(54) **ELECTROCHEMICAL HYDROGEN PUMP**

(30) Priority: 19.12.2018 JP 2018237039; 06.11.2019 JP 2019201658
(71) Applicant: Panasonic Intellectual Property Management Co., Ltd., Osaka-shi, Osaka 540-6207 (JP)
(72) Inventor: NAKAUE, Takayuki, Osaka 540-6207 (JP); UKAI, Kunihiro, Osaka 540-6207 (JP)
(74) Representative: Grünecker Patent- und Rechtsanwälte PartG mbB
(86) International application number: PCT/JP2019/045139
(87) International publication number: WO 2020/129513

(57) **Abstract**

An electrochemical hydrogen pump includes an electrolyte membrane, an anode on a first primary surface of the electrolyte membrane, a cathode on a second primary surface of the electrolyte membrane, and an anode separator on the anode. The anode includes an anode catalyst layer on the first primary surface of the electrolyte membrane and an anode gas diffusion layer on the anode catalyst layer. The anode gas diffusion layer includes a porous carbon sheet that is a powder molded body.

## Description

### Technical Field

The present disclosure relates to an electrochemical hydrogen pump.

### Background Art

In recent years, hydrogen has been attracting attention as a clean alternative energy source to replace fossil fuels against a background of environmental problems, such as global warming, and energy issues, such as the depletion of petroleum resources. When burnt, basically, hydrogen only releases water, with zero emissions of carbon dioxide, which causes global warming, and almost zero emissions of substances like nitrogen oxides, and this is why it is hoped that hydrogen will serve as clean energy. An example of a device that efficiently uses hydrogen as a fuel is fuel cells. The development and popularization of fuel cells are ongoing for automotive power supply and household power generation applications.

In the forthcoming hydrogen society, technologies will need to be developed to enable not only the production but also high-density storage and small-volume, low-cost transport or use of hydrogen. In particular, further popularization of fuel cells, which provide distributed energy sources, requires preparing infrastructure for the supply of hydrogen. Studies aimed at producing, purifying, and densely storing high-purity hydrogen are also ongoing to ensure stable supply of hydrogen.

For example, PTL 1 discloses, in relation to an electrochemical hydrogen pump that purifies and pressurizes hydrogen, an anode power feeder that includes first and second feeder sections made from two respective types of titanium metal fibers varying in diameter. This reduces damage to the electrolyte membrane and improves energy efficiency.

PTL 2 discloses an anode power feeder that has a lower percentage of porosity in a surface layer of its base than in its base as a result of the pressing of the base of the power feeder, made as a sintered mass of titanium powder. This helps improve the density and smoothness of the surface layer, thereby reducing damage to the electrolyte membrane.

### Citation List

### Patent Literature

PTL 1: Japanese Unexamined Patent Application Publication No. 2001-342587
PTL 2: Japanese Unexamined Patent Application Publication No. 2012-180553

### Summary of Invention

### Technical Problem

An object of an aspect of the present disclosure is to provide, for example, an electrochemical hydrogen pump that can cost less in terms of its anode gas diffusion layer than with an anode gas diffusion layer made of metal.

### Solution to Problem

To achieve this object, an electrochemical hydrogen pump according to an aspect of the present disclosure includes an electrolyte membrane, an anode on a first primary surface of the electrolyte membrane, a cathode on a second primary surface of the electrolyte membrane, and an anode separator on the anode. The anode includes an anode catalyst layer on the first primary surface of the electrolyte membrane and an anode gas diffusion layer on the anode catalyst layer. The anode gas diffusion layer includes a porous carbon sheet that is a powder molded body.

### Advantageous Effects of Invention

The electrochemical hydrogen pump according to an aspect of the present disclosure is advantageous in that it can cost less in terms of its anode gas diffusion layer than with an anode gas diffusion layer made of metal.

### Brief Description of Drawings

[Fig. 1A] Fig. 1A is a diagram illustrating an example of an electrochemical hydrogen pump according to Embodiment 1.
[Fig. 1B] Fig. 1B is an enlarged view of portion B of the electrochemical hydrogen pump illustrated in Fig. 1A.
[Fig. 2A] Fig. 2A is a diagram illustrating an example of an electrochemical hydrogen pump according to Embodiment 1.
[Fig. 2B] Fig. 2B is an enlarged view of portion B of the electrochemical hydrogen pump illustrated in Fig. 2A.
[Fig. 3] Fig. 3 is a diagram illustrating an example of a porous carbon sheet in an electrochemical hydrogen pump according to Embodiment 1.
[Fig. 4] Fig. 4 is a diagram illustrating exemplary results of an analysis by Raman spectroscopy of a porous carbon sheet in an electrochemical hydrogen pump according to Embodiment 1.
[Fig. 5] Fig. 5 is a diagram illustrating an example of a porous carbon sheet in an electrochemical hydrogen pump according to Example 2 of Embodiment 1.
[Fig. 6] Fig. 6 is a diagram illustrating exemplary measured porosity percentages of a porous carbon sheet in an electrochemical hydrogen pump according to Example 3 of Embodiment 1.

### Description of Embodiments

Both PTL 1 and 2 use gas diffusion layers made of metal. If made of metal, however, gas diffusion layers need to be plated with a noble metal to be acceptably resistant to corrosion in acidic environments, and this causes a cost increase. The inventors considered using carbon-based gas diffusion layers, which resist corrosion in acidic environments and cost less, but found the problem that the anode gas diffusion layer buckles into a flow channel in the anode separator under the effect of a high cathode pressure.

After extensive research to address this, the inventors came up with using a carbon sheet which is a powder molded body in the anode to reduce the risk of this buckling and conceived an aspect of the present disclosure as described below. The inventors also came up with using a porous carbon sheet containing amorphous carbon in the anode to reduce the risk of this buckling and conceived an aspect of the present disclosure as described below.

That is, an electrochemical hydrogen pump according to a first aspect of the present disclosure includes an electrolyte membrane, an anode on a first primary surface of the electrolyte membrane, a cathode on a second primary surface of the electrolyte membrane, and an anode separator on the anode. The anode includes an anode catalyst layer on the first primary surface of the electrolyte membrane and an anode gas diffusion layer on the anode catalyst layer. The anode gas diffusion layer includes a porous carbon sheet that is a powder molded body.

Configured as such, the electrochemical hydrogen pump according to this aspect can cost less in terms of its anode gas diffusion layer than with an anode gas diffusion layer made of metal. At the same time, the risk of the buckling of the anode gas diffusion layer into the anode separator can be reduced.

Specifically, the electrochemical hydrogen pump according to this aspect offers enhanced rigidity, for example compared with ones having a porous carbon sheet made from carbon fibers, by virtue of having a porous carbon sheet made from a powder molded body.

An electrochemical hydrogen pump according to a second aspect of the present disclosure includes an electrolyte membrane, an anode on a first primary surface of the electrolyte membrane, a cathode on a second primary surface of the electrolyte membrane, and an anode separator on the anode. The anode includes an anode catalyst layer on the first primary surface of the electrolyte membrane and an anode gas diffusion layer on the anode catalyst layer. The anode gas diffusion layer includes a porous carbon sheet whose first surface layer, which is closer to the anode separator, contains amorphous carbon. When the porous carbon sheet is analyzed by Raman spectroscopy, D/G > 1.0.

Configured as such, the electrochemical hydrogen pump according to this aspect can cost less in terms of its anode gas diffusion layer than with an anode gas diffusion layer made of metal. At the same time, the risk of the buckling of the anode gas diffusion layer into the anode separator can be reduced.

Specifically, a porous carbon sheet containing amorphous carbon has relatively few of sharp points that have been observed with the hitherto used metal porous media. Even when such a porous carbon sheet is pressed against an electrolyte membrane, it is unlikely that the electrolyte membrane is damaged. The electrochemical hydrogen pump according to this aspect, therefore, offers reduced risk of damage to the electrolyte membrane compared with known ones made with a metal porous medium.

In general, furthermore, amorphous carbon, in which carbon-carbon bonds are in an amorphous structure, is more rigid than carbon in which carbon-carbon bonds are in a crystalline structure. The anode gas diffusion layer in the electrochemical hydrogen pump according to this aspect is therefore acceptably rigid because the porous carbon sheet in it contains amorphous carbon in such an amount that D/G > 1.0 when the sheet is analyzed by Raman spectroscopy.

An electrochemical hydrogen pump according to a third aspect of the present disclosure is: In the first or second aspect, the porous carbon sheet in the electrochemical hydrogen pump may have a Young's modulus in the direction of thickness higher than or equal to 2.5 GPa at least in its first surface layer, which is closer to the anode separator.

When its porous carbon sheet has a desired compressive strength (e.g., 20 MPa) in the direction of thickness, the electrochemical hydrogen pump according to this aspect, configured as described above, suffers to a lesser degree the deformation of its anode gas diffusion layer caused by a differential pressure (high pressure) that occurs between the cathode and anode during hydrogen pressurization than it would if the Young's modulus in the direction of thickness of the first surface layer, which is closer to the anode separator, were lower than 2.5 GPa. For example, the electrochemical hydrogen pump according to this aspect offers reduced risk of the buckling of the anode gas diffusion layer in a flow channel in the anode separator caused by such a differential pressure.

An electrochemical hydrogen pump according to a fourth aspect of the present disclosure is: In the first or second aspect, the porous carbon sheet in the electrochemical hydrogen pump may have a Young's modulus in the direction of thickness higher than or equal to 7.8 GPa at least in its first surface layer, which is closer to the anode separator.

When its porous carbon sheet has a desired compressive strength (e.g., 40 MPa) in the direction of thickness, the electrochemical hydrogen pump according to this aspect, configured as described above, suffers to a lesser degree the deformation of its anode gas diffusion layer caused by a differential pressure (high pressure) that occurs between the cathode and anode during hydrogen pressurization than it would if the Young's modulus in the direction of thickness of the first surface layer, which is closer to the anode separator, were lower than 7.8 GPa. For example, the electrochemical hydrogen pump according to this aspect offers reduced risk of the buckling of the anode gas diffusion layer in a flow channel in the anode separator caused by such a differential pressure.

An electrochemical hydrogen pump according to a fifth aspect of the present disclosure is: In the first or second aspect, the porous carbon sheet in the electrochemical hydrogen pump may have a flexural strength higher than or equal to 10 MPa at least in its first surface layer, which is closer to the anode separator.

When its porous carbon sheet has a desired compressive strength (e.g., 20 MPa) in the direction of thickness, the electrochemical hydrogen pump according to this aspect, configured as described above, suffers to a lesser degree the deformation of its anode gas diffusion layer caused by a differential pressure (high pressure) that occurs between the cathode and anode during hydrogen pressurization than it would if the flexural strength of the first surface layer, which is closer to the anode separator, were lower than 10 MPa. For example, the electrochemical hydrogen pump according to this aspect offers reduced risk of the buckling of the anode gas diffusion layer in a flow channel in the anode separator caused by such a differential pressure.

An electrochemical hydrogen pump according to a sixth aspect of the present disclosure is: In the first or second aspect, the porous carbon sheet in the electrochemical hydrogen pump may have a flexural strength higher than or equal to 20 MPa at least in its first surface layer, which is closer to the anode separator.

When its porous carbon sheet has a desired compressive strength (e.g., 40 MPa) in the direction of thickness, the electrochemical hydrogen pump according to this aspect, configured as described above, suffers to a lesser degree the deformation of its anode gas diffusion layer caused by a differential pressure (high pressure) that occurs between the cathode and anode during hydrogen pressurization than it would if the flexural strength of the first surface layer, which is closer to the anode separator, were lower than 20 MPa. For example, the electrochemical hydrogen pump according to this aspect offers reduced risk of the buckling of the anode gas diffusion layer in a flow channel in the anode separator caused by such a differential pressure.

An electrochemical hydrogen pump according to a seventh aspect of the present disclosure is: In any one of the first, second, third, and fifth aspects, the porous carbon sheet in the electrochemical hydrogen pump may have a porosity lower than or equal to 45% at least in its first surface layer, which is closer to the anode separator. An electrochemical hydrogen pump according to an eighth aspect of the present disclosure, furthermore, is: In any one of the first, second, fourth, and sixth aspects, the porous carbon sheet in the electrochemical hydrogen pump may have a porosity lower than or equal to 39% at least in its first surface layer, which is closer to the anode separator.

An electrochemical hydrogen pump according to a ninth aspect of the present disclosure is: In the seventh aspect, the porous carbon sheet in the electrochemical hydrogen pump may have a porosity lower than or equal to 45% in its second surface layer, which is closer to the anode catalyst layer. An electrochemical hydrogen pump according to a tenth aspect of the present disclosure, furthermore, is: In the eighth aspect, the porous carbon sheet in the electrochemical hydrogen pump may have a porosity lower than or equal to 39% in its second surface layer, which is closer to the anode catalyst layer.

An electrochemical hydrogen pump according to an eleventh aspect of the present disclosure is: In any one of the first to tenth aspects, the porous carbon sheet in the electrochemical hydrogen pump may have higher rigidity in its first surface layer, which is closer to the anode separator, than in the layer lying under this first surface layer. An electrochemical hydrogen pump according to a twelfth aspect of the present disclosure, furthermore, is: In the eleventh aspect, the porous carbon sheet in the electrochemical hydrogen pump may have higher rigidity in its second surface layer, which is closer to the anode catalyst layer, than in the layer lying under this second surface layer.

Configured as described above, the electrochemical hydrogen pumps according to these aspects suffer to a lesser degree the deformation of their anode gas diffusion layer caused by a differential pressure (high pressure) that occurs between the cathode and anode during hydrogen pressurization. For example, the electrochemical hydrogen pumps according to these aspects offer reduced risk of the buckling of the anode gas diffusion layer in a flow channel in the anode separator caused by such a differential pressure.

An electrochemical hydrogen pump according to a thirteenth aspect of the present disclosure is: In any one of the first to twelfth aspects, the porous carbon sheet in the electrochemical hydrogen pump may have a lower porosity in its first surface layer, which is closer to the anode separator, than in the layer lying under this first surface layer. An electrochemical hydrogen pump according to a fourteenth aspect of the present disclosure, furthermore, is: In the thirteenth aspect, the porous carbon sheet in the electrochemical hydrogen pump may have a lower porosity in its second surface layer, which is closer to the anode catalyst layer, than in the layer lying under this second surface layer.

If the porous carbon sheet is, for example, a sintered body made from carbon particles, reducing the porosity of the porous carbon sheet will increase necking between the carbon particles forming the porous carbon sheet (bonding together of the particles). Hence the rigidity of the porous carbon sheet is improved. The electrochemical hydrogen pumps according to these aspects therefore offer improved rigidity of the first surface layer, which is closer to the anode separator. The electrochemical hydrogen pumps according to these aspects also offer improved rigidity of the second surface layer, which is closer to the anode catalyst layer. As a result, these electrochemical hydrogen pumps suffer to a lesser degree the deformation of their anode gas diffusion layer caused by a differential pressure that occurs between the cathode and anode during hydrogen pressurization. For example, the electrochemical hydrogen pumps according to these aspects offer reduced risk of the buckling of the anode gas diffusion layer in a flow channel in the anode separator caused by such a differential pressure.

An electrochemical hydrogen pump according to a fifteenth aspect of the present disclosure is: In any one of the first to fourteenth aspects, the porous carbon sheet in the electrochemical hydrogen pump may have a peak pore diameter smaller than the thickness of the electrolyte membrane.

If the peak pore diameter of the porous carbon sheet were larger than or equal to the thickness of the electrolyte membrane, the electrolyte membrane could break while the electrochemical hydrogen pump is operating to pressurize hydrogen as a result of the electrolyte membrane falling into a pore in the porous carbon sheet because of a differential pressure that occurs between the cathode and anode. The electrochemical hydrogen pump according to this aspect, however, offers reduced risk of such an event by virtue of the peak pore diameter of the porous carbon sheet being smaller than the thickness of the electrolyte membrane.

An electrochemical hydrogen pump according to a sixteenth aspect of the present disclosure is: In any one of the first to fifteenth aspects, the porous carbon sheet in the electrochemical hydrogen pump may have an overall porosity higher than or equal to 20%.

If the overall porosity of the porous carbon sheet were lower than 20%, the diffusibility of the anode gas diffusion layer in diffusing gases into the anode catalyst layer could be insufficient. The electrochemical hydrogen pump according to this aspect, however, offers sufficient diffusibility of the anode gas diffusion layer in terms of gas diffusion into the anode catalyst layer because the 20% or higher overall porosity of the porous carbon sheet encourages the presence of pores leading to the outside (open holes) in the anode gas diffusion layer. By virtue of this, anode gas coming from the anode separator is supplied properly to the anode catalyst layer through the anode gas diffusion layer.

Incidentally, when an electric current flows between an anode and a cathode in an electrochemical hydrogen pump, protons move inside an electrolyte membrane from the anode to the cathode, bringing water with them. If the operating temperature of the electrochemical hydrogen pump is higher than or equal to a particular temperature, the water that has moved from the anode to the cathode (electroosmotic water) is present as steam. As the hydrogen gas pressure at the cathode becomes higher, however, the percentage of liquid water increases. If liquid water is present in the cathode, part of the water is pushed back to the anode because of a differential pressure between the cathode and anode. The amount of water pushed back to the anode increases with elevating hydrogen gas pressure at the cathode. As the hydrogen gas pressure at the cathode increases, therefore, it becomes more likely that the anode floods with water pushed back to the anode. When such an event of flooding occurs and interferes with gas diffusion at the anode, the electrochemical hydrogen pump may become less efficient in hydrogen pressurization because of increased diffusion resistance in the electrochemical hydrogen pump.

To address this, an electrochemical hydrogen pump according to a seventeenth aspect of the present disclosure is: In any one of the first to sixteenth aspects, the second surface layer, which is closer to the anode catalyst layer, of the anode gas diffusion layer in the electrochemical hydrogen pump may be water-repellent.

Configured as such, the electrochemical hydrogen pump according to this aspect quickly drains, on a stream of anode gas, water pushed back to the anode by virtue of the second surface layer, which is closer to the anode catalyst layer, of the anode gas diffusion layer being water-repellent. Flooding is therefore reduced, and, as a result, adequate gas diffusibility is maintained at the anode.

In general, an electrolyte membrane becomes highly proton-conductive under high-temperature and highly humidified conditions (e.g., approximately 60°C), and an electrochemical hydrogen pump becomes more efficient in hydrogen pressurization under such conditions. As stated, when an electric current flows between an anode and a cathode in an electrochemical hydrogen pump, protons move inside an electrolyte membrane from the anode to the cathode, bringing water with them. Then part of the electroosmotic water, which has moved from the anode to the cathode, is drained from the cathode together with high-pressure hydrogen gas.

If the electric current that flows between the anode and cathode has increased density, the amount of electroosmotic water increases, and the amount of electroosmotic water drained out of the cathode increases accordingly. In that case, the electrochemical hydrogen pump may become less efficient in hydrogen pressurization because the electrolyte membrane in the electrochemical hydrogen pump dries more quickly.

To address this, an electrochemical hydrogen pump according to an eighteenth aspect of the present disclosure is: In any one of the first to seventeenth aspects, the first surface layer, which is closer to the anode separator, of the anode gas diffusion layer in the electrochemical hydrogen pump may be hydrophilic.

Configured as such, the electrochemical hydrogen pump according to this aspect has a water-retaining function in the first surface layer, which is closer to the anode separator, of its anode gas diffusion layer by virtue of this first surface layer being hydrophilic. Water in anode gas can therefore be easily supplied to the electrolyte membrane through the anode gas diffusion layer, hence reduced risk of drying up of the electrolyte membrane in the electrochemical hydrogen pump.

The following describes embodiments of the present disclosure with reference to the attached drawings. The embodiments described below are all illustrate examples of the aspects described above. The shapes, materials, structural elements, the positions of and connections between elements, and other information given below are merely examples and are not intended to limit the aspects described above unless given in a claim. Those elements that are not recited in the independent claims, which represent the most generic concepts of the aspects described above, are described as optional elements. An element assigned the same reference sign in different drawings may be described only once. The drawings are schematic illustrations of structural elements given to help understand and therefore may be inaccurate in the representation of shape, relative dimensions, etc.

### (Embodiment 1)

### [Device Configuration]

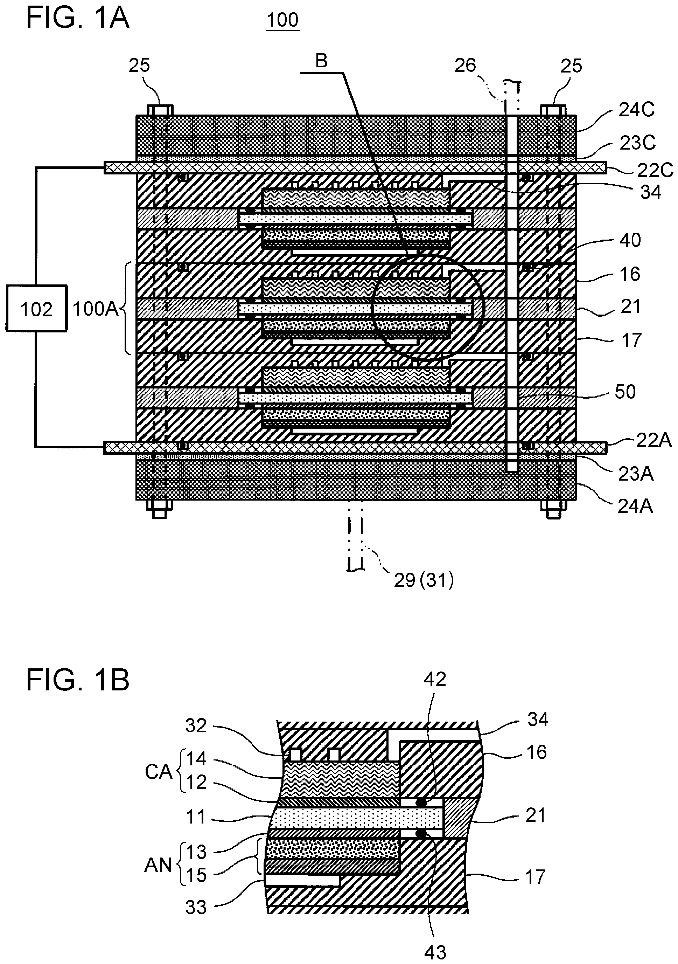

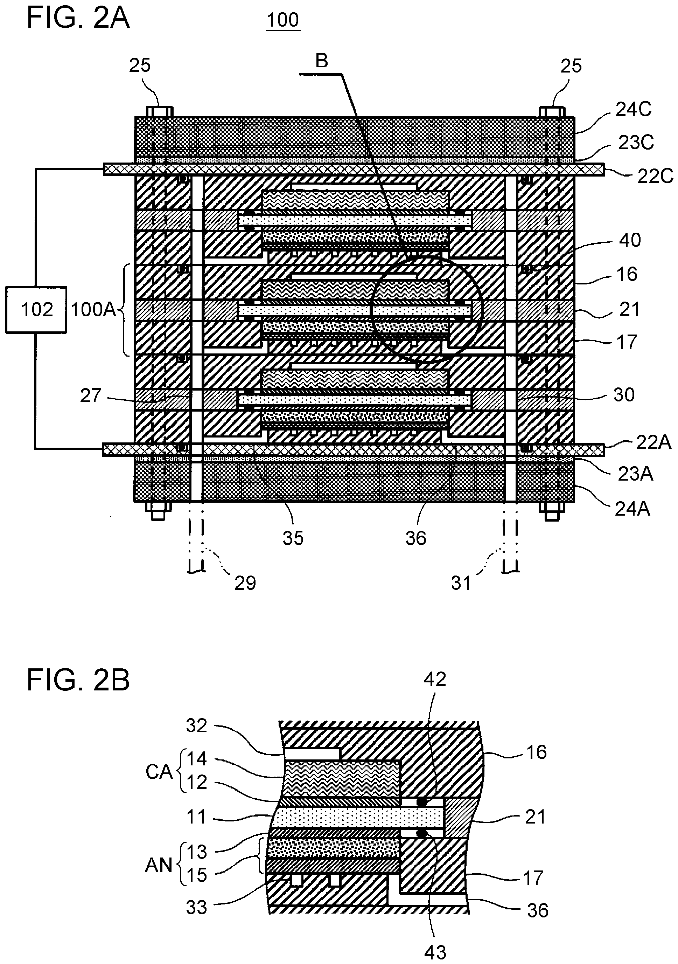

Figs. 1A and 2A are diagrams illustrating an example of an electrochemical hydrogen pump according to Embodiment 1. Fig. 1B is an enlarged view of portion B of the electrochemical hydrogen pump illustrated in Fig. 1A. Fig. 2B is an enlarged view of portion B of the electrochemical hydrogen pump illustrated in Fig. 2A.

Fig. 1A illustrates a vertical section of an electrochemical hydrogen pump 100 that includes a straight line passing through the center of the electrochemical hydrogen pump 100 and the center of a cathode gas outlet manifold 50 in plan view. Fig. 2A illustrates a vertical section of the electrochemical hydrogen pump 100 that includes a straight line passing through the center of the electrochemical hydrogen pump 100, the center of an anode gas inlet manifold 27, and the center of an anode gas outlet manifold 30 in plan view.

In the example illustrated in Figs. 1A and 2A, the electrochemical hydrogen pump 100 includes at least one hydrogen pump unit 100A.

The electrochemical hydrogen pump 100 has a stack of multiple hydrogen pump units 100A. For example, in Figs. 1A and 2A, there is a three-tier stack of hydrogen pump units 100A. This, however, is not the only possible number of hydrogen pump units 100A. That is, any number of hydrogen pump units 100A can be used as appropriate on the basis of the operating conditions, such as the volume of hydrogen the electrochemical hydrogen pump 100 pressurizes.

A hydrogen pump unit 100A includes an electrolyte membrane 11, an anode AN, a cathode CA, a cathode separator 16, an anode separator 17, and an insulator 21. In a hydrogen pump unit 100A, furthermore, an electrolyte membrane 11, an anode catalyst layer 13, a cathode catalyst layer 12, an anode gas diffusion layer 15, a cathode gas diffusion layer 14, an anode separator 17, and a cathode separator 16 are stacked together.

The anode AN is on a first primary surface of the electrolyte membrane 11. The anode AN is an electrode that includes an anode catalyst layer 13 and an anode gas diffusion layer 15. There is a ring-shaped seal 43 surrounding the anode catalyst layer 13 in plan view, and the anode catalyst layer 13 is sealed with the seal 43 properly.

The cathode CA is on a second primary surface of the electrolyte membrane 11. The cathode CA is an electrode that includes a cathode catalyst layer 12 and a cathode gas diffusion layer 14. There is a ring-shaped seal 42 surrounding the cathode catalyst layer 12 in plan view, and the cathode catalyst layer 12 is sealed with the seal 42 properly.

As a result of these, the electrolyte membrane 11 is sandwiched between the anode AN and cathode CA to touch each of the anode and cathode catalyst layers 13 and 12. The stack of the cathode CA, electrolyte membrane 11, and anode AN is referred to as a membrane electrode assembly (hereinafter MEA).

The electrolyte membrane 11 is proton-conductive. The electrolyte membrane 11 can be of any type as long as it is proton-conductive. For example, the electrolyte membrane 11 can be a fluoropolymer or hydrocarbon polymer electrolyte membrane, although these are not the only possibilities. Specific examples of membranes that can be used as the electrolyte membrane 11 include Nafion^{®} (DuPont) and Aciplex^{®} (Asahi Kasei Corporation) membranes.

The anode catalyst layer 13 is on the first primary surface of the electrolyte membrane 11. An example of a catalyst metal contained in the anode catalyst layer 13 is platinum, but this is not the only possibility.

The cathode catalyst layer 12 is on the second primary surface of the electrolyte membrane 11. An example of a catalyst metal contained in the cathode catalyst layer 12 is platinum, but this is not the only possibility.

Examples of catalyst carriers for the cathode and anode catalyst layers 12 and 13 include, but are not limited to, carbon particles, for example of carbon black or graphite, and electrically conductive oxide particles.

In the cathode and anode catalyst layers 12 and 13, fine particles of catalyst metal are held on a catalyst carrier in a highly dispersed state. Usually, a hydrogen ion-conductive ionomer component is added to these cathode and anode catalyst layers 12 and 13 to expand the field for electrode reactions.

The cathode gas diffusion layer 14 is on the cathode catalyst layer 12. The cathode gas diffusion layer 14 is a porous medium, conducts electricity, and allows gases to diffuse therethrough. Desirably, the cathode gas diffusion layer 14 is elastic so that it will properly follow the displacement and deformation of structural elements of the electrochemical hydrogen pump 100 that occur in response to a differential pressure between the cathode CA and anode AN while the hydrogen pump 100 is in operation. In this embodiment, the cathode gas diffusion layer 14 in the electrochemical hydrogen pump 100 is an element made from carbon fibers. For example, the cathode gas diffusion layer 14 may be a porous carbon fiber sheet, such as a piece of carbon paper, carbon cloth, or carbon felt. The base material for the cathode gas diffusion layer 14, however, does not need to be a carbon fiber sheet. For example, the base material for the cathode gas diffusion layer 14 may be a sintered mass of metal fibers, for example made from titanium, a titanium alloy, or stainless steel, a sintered mass of metal particles made from any such metal, etc.

The anode gas diffusion layer 15 is on the anode catalyst layer 13. The anode gas diffusion layer 15 is a porous medium, conducts electricity, and allows gases to diffuse therethrough. Desirably, the anode gas diffusion layer 15 is highly rigid so that it will limit the displacement and deformation of structural elements of the electrochemical hydrogen pump 100 that occur in response to a differential pressure between the cathode CA and anode AN while the hydrogen pump 100 is in operation.

In this embodiment, the anode gas diffusion layer 15 in the electrochemical hydrogen pump 100 includes a porous carbon sheet that is a powder molded body. This powder molded body may be, for example, a sheet-shaped sintered body made from carbon particles (carbon powder sintered body).

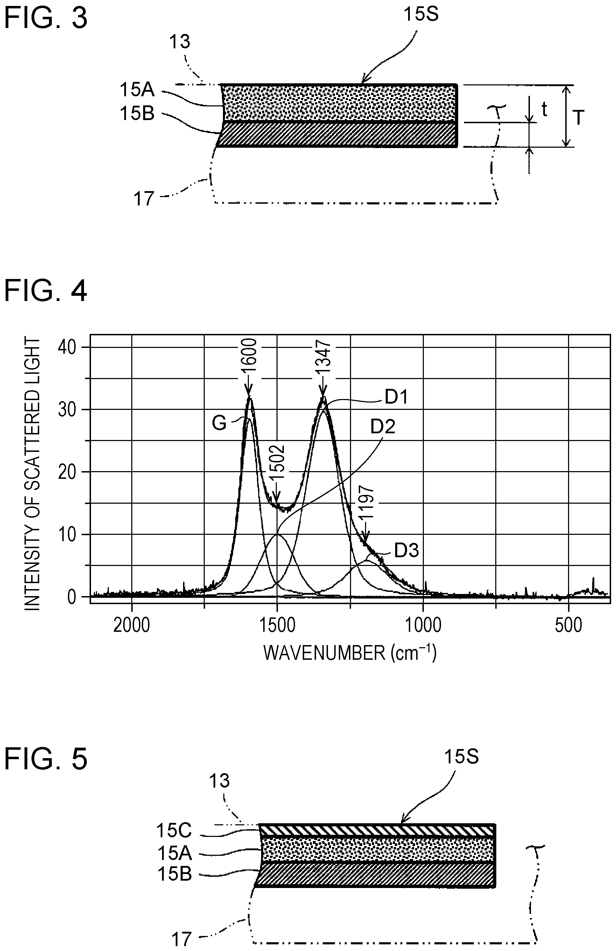

To take a specific example, the anode gas diffusion layer 15 may include, as illustrated in Fig. 3, a porous carbon sheet 15S whose first surface layer 15B, which is closer to the anode separator 17, contains amorphous carbon. As stated, the porous carbon sheet 15S can be a sheet-shaped sintered body made from carbon particles. In that case, the carbon particles in the porous carbon sheet 15S are of amorphous carbon, in which carbon-carbon bonds are in an amorphous structure. As such, amorphous carbon is highly rigid. That is, the higher the percentage of amorphous carbon in the porous carbon sheet 15S is, the more rigid the porous carbon sheet 15S is. The porous carbon sheet 15S, therefore, has higher rigidity in its first surface layer 15B, which is closer to the anode separator 17, than in the layer 15A lying under this first surface layer 15B, or an inner layer 15A.

To summarize, the porous carbon sheet 15S is a stack in which one primary surface of its first surface layer 15B is in contact with a primary surface of the anode separator 17, with the other primary surface of the first surface layer 15B in contact with one primary surface of the layer 15A therebeneath (inner layer). The other primary surface of the inner layer 15A is in contact with the anode catalyst layer 13.

Examples of amorphous carbon materials include glassy carbon (glass-like carbon) and diamond-like carbon (DLC).

In this embodiment, furthermore, the thickness t of the rigid layer, which is in contact with a primary surface of the anode separator 17, of the porous carbon sheet 15S in the electrochemical hydrogen pump 100 is selected in relation to the total thickness T of the porous carbon sheet 15S so that the following relationship holds: 0 < t/T ≤ 1. This means if t/T = 1 for the thickness of the two elements, the entire porous carbon sheet 15S is a layer containing amorphous carbon.

The anode separator 17 is an element disposed on the anode AN. The cathode separator 16 is an element disposed on the cathode CA. In the middle of each of the cathode and anode separators 16 and 17 is a recess. In these recesses, the cathode and anode gas diffusion layers 14 and 15 are contained respectively.

In such a way, an MEA as described above is sandwiched between cathode and anode separators 16 and 17, forming a hydrogen pump unit 100A.

The primary surface of the cathode separator 16 touching the cathode gas diffusion layer 14 has a cathode gas flow channel 32 created therein, for example a serpentine one that includes multiple U-shaped turns and multiple straight stretches in plan view. The straight stretches of the cathode gas flow channel 32 extend perpendicular to the plane of the page of Fig. 1A. Such a cathode gas flow channel 32, however, is by way of example and is not the only possibility. For example, the cathode gas flow channel may be formed by multiple linear passages.

The primary surface of the anode separator 17 touching the anode gas diffusion layer 15 has an anode gas flow channel 33 created therein, for example a serpentine one that includes multiple U-shaped turns and multiple straight stretches in plan view. The straight stretches of the anode gas flow channel 33 extend perpendicular to the plane of the page of Fig. 2A. Such an anode gas flow channel 33, however, is by way of example and is not the only possibility. For example, the anode gas flow channel may be formed by multiple linear passages.

Between the electrically conductive cathode and anode separators 16 and 17, furthermore, there is a ring-shaped flat-plate insulator 21 surrounding the MEA. By virtue of this, short-circuiting between the cathode and anode separators 16 and 17 is prevented.

The electrochemical hydrogen pump 100 also includes first and second end plates, which are at the ends in the direction of stacking of the hydrogen pump units 100A, and fasteners 25, which fasten the hydrogen pump units 100A, first end plate, and second end plate together in the direction of stacking.

In the example illustrated in Figs. 1A and 2A, a cathode end plate 24C and an anode end plate 24A correspond to these first and second end plates, respectively. That is, the anode end plate 24A is an end plate disposed on the anode separator 17 located at a first end in the direction of stacking of the components of the hydrogen pump units 100A. The cathode end plate 24C is an end plate disposed on the cathode separator 16 located at a second end in the direction of stacking of the components of the hydrogen pump units 100A.

The fasteners 25 can be of any type as long as they can fasten the hydrogen pump units 100A, cathode end plate 24C, and anode end plate 24A together in the direction of stacking.

For example, the fasteners 25 can be bolts and nuts with a disk spring or a similar tool.

The bolts as a component of the fasteners 25 in that case may be made to penetrate only through the anode and cathode end plates 24A and 24C. In this embodiment, however, the bolts for the electrochemical hydrogen pump 100 penetrate through the components of the three-tier stack of hydrogen pump units 100A, a cathode feed plate 22C, a cathode insulating plate 23C, an anode feed plate 22A, an anode insulating plate 23A, the anode end plate 24A, and the cathode end plate 24C. The fasteners 25 apply a desired pressure to the hydrogen pump units 100A by compressing an end face of the cathode separator 16 at the second end in the aforementioned direction of stacking and an end face of the anode separator 17 at the first end in the aforementioned direction of stacking with the cathode and anode end plates 24C and 24A, respectively, with the cathode feed plate and insulating plate 22C and 23C and the anode feed plate and insulating plate 22A and 23A interposed therebetween.

In this way, the electrochemical hydrogen pump 100 according to this embodiment keeps its three-tier stack of hydrogen pump units 100A properly stacked in the aforementioned direction of stacking by making use of fastening pressure applied by fasteners 25. Since the bolts as a component of the fasteners 25 penetrate through the components of the electrochemical hydrogen pump 100, furthermore, these components are well prevented from moving in plane.

In this embodiment, furthermore, the cathode gas flow channel 32, through which cathode gas coming out of the cathode gas diffusion layer 14 flows, of each individual hydrogen pump unit 100A in the electrochemical hydrogen pump 100 communicates with one another. The following describes how the cathode gas flow channels 32 communicate with reference to drawings.

First, as illustrated in Fig. 1A, the cathode gas outlet manifold 50 is a series of through holes created through the components of the three-tier stack of hydrogen pump units 100A and the cathode end plate 24C and a blind hole created in the anode end plate 24A. The cathode end plate 24C also has a cathode gas outlet line 26. The cathode gas outlet line 26 may be piping through which hydrogen (H₂) discharged from the cathode CA flows. The cathode gas outlet line 26 communicates with this cathode gas outlet manifold 50.

The cathode gas outlet manifold 50, furthermore, communicates with one end of the cathode gas flow channel 32 of each individual hydrogen pump unit 100A via separate cathode gas conduits 34. By virtue of this, streams of hydrogen that have passed through the cathode gas flow channel 32 and cathode gas conduit 34 of each individual hydrogen pump unit 100A are combined together at the cathode gas outlet manifold 50. The combined stream of hydrogen is then guided to the cathode gas outlet line 26.

In such a way, the cathode gas flow channel 32 of each individual hydrogen pump unit 100A communicates with one another via the cathode gas conduit 34 of each hydrogen pump unit 100A and the cathode gas outlet manifold 50.

Between cathode and anode separators 16 and 17, a cathode separator 16 and the cathode feed plate 22C, and an anode separator 17 and the anode feed plate 22A, there are ring-shaped seals 40, such as O-rings, surrounding the cathode gas outlet manifold 50 in plan view. The cathode gas outlet manifold 50 is sealed with these seals 40 properly.

As illustrated in Fig. 2A, the anode end plate 24A has an anode gas inlet line 29. The anode gas inlet line 29 may be piping through which anode gas to be supplied to the anode AN flows. An example of such an anode gas is a hydrogen-containing gas with steam therein. The anode gas inlet line 29 communicates with a tubular anode gas inlet manifold 27. The anode gas inlet manifold 27 is a series of through holes created through the components of the three-tier stack of hydrogen pump units 100A and the anode end plate 24A.

The anode gas inlet manifold 27 communicates with a first end of the anode gas flow channel 33 of each individual hydrogen pump unit 100A via separate first anode gas conduits 35. By virtue of this, anode gas supplied from the anode gas inlet line 29 to the anode gas inlet manifold 27 is distributed to each individual hydrogen pump unit 100A through the first anode gas conduit 35 of each hydrogen pump unit 100A. While passing through the anode gas flow channel 33, the distributed anode gas is supplied to the anode catalyst layer 13 through the anode gas diffusion layer 15.

As illustrated in Fig. 2A, the anode end plate 24A also has an anode gas outlet line 31. The anode gas outlet line 31 may be piping through which anode gas discharged from the anode AN flows. The anode gas outlet line 31 communicates with a tubular anode gas outlet manifold 30. The anode gas outlet manifold 30 is a series of through holes created through the components of the three-tier stack of hydrogen pump units 100A and the anode end plate 24A.

The anode gas outlet manifold 30 communicates with a second end of the anode gas flow channel 33 of each individual hydrogen pump unit 100A via separate second anode gas conduits 36. By virtue of this, streams of anode gas that have passed through the anode gas flow channel 33 of each individual hydrogen pump units 100A are supplied to the anode gas outlet manifold 30, and combined together there, through each individual second anode gas conduit 36. The combined stream of anode gas is then guided to the anode gas outlet line 31.

Between cathode and anode separators 16 and 17, a cathode separator 16 and the cathode feed plate 22C, and an anode separator 17 and the anode feed plate 22A, there are ring-shaped seals 40, such as O-rings, surrounding the anode gas inlet and outlet manifolds 27 and 30 in plan view. The anode gas inlet and outlet manifolds 27 and 30 are sealed with these seals 40 properly.

As illustrated in Figs. 1A and 2A, the electrochemical hydrogen pump 100 includes a voltage applicator 102.

The voltage applicator 102 is a device that applies a voltage across the anode and cathode catalyst layers 13 and 12. Specifically, the high potential of the voltage applicator 102 has been applied to the anode catalyst layer 13, and the low potential of the voltage applicator 102 has been applied to the cathode catalyst layer 12. The voltage applicator 102 can be of any type as long as it can apply a voltage across the anode and cathode catalyst layers 13 and 12. For example, the voltage applicator 102 may be a device that controls the voltage applied across the anode and cathode catalyst layers 13 and 12. The voltage applicator 102 in that case includes a DC-to-DC converter if it is connected to a direct-current power supply, such as a battery, solar cell, or fuel cell, or includes an AC-to-DC converter if it is connected to an alternating-current power supply, such as mains electricity.

Alternatively, the voltage applicator 102 may be, for example, a multi-range power supply, which controls the voltage it applies across the anode and cathode catalyst layers 13 and 12 and controls the current to flow between the anode and cathode catalyst layers 13 and 12 so that the amount of electricity supplied to the hydrogen pump units 100A will match a particular preset value.

In the example illustrated in Figs. 1A and 2A, the low-potential terminal of the voltage applicator 102 is connected to the cathode feed plate 22C, and the high-potential terminal of the voltage applicator 102 is connected to the anode feed plate 22A. The cathode feed plate 22C is in electrical contact with the cathode separator 16 located at the second end in the aforementioned direction of stacking, and the anode feed plate 22A is in electrical contact with the anode separator 17 located at the first end in the aforementioned direction of stacking.

Although not illustrated, a hydrogen supply system that includes this electrochemical hydrogen pump 100 can also be built. In that case, the hydrogen supply system is equipped as necessary for its operation of supplying hydrogen.

For example, the hydrogen supply system may be fitted with a dew-point controller (e.g., a humidifier) that controls the dew point of the mixed gas produced by the mixing together of a heavily humidified hydrogen-containing anode gas discharged from the anode AN through the anode gas outlet line 31 and an only slightly humidified hydrogen-containing anode gas supplied from an external hydrogen source through the anode gas inlet line 29. The hydrogen-containing anode gas from an external hydrogen source in that case may be produced using, for example, a water electrolyzer.

Alternatively, the hydrogen supply system may be fitted with, for example, a temperature sensor that detects the temperature of the electrochemical hydrogen pump 100, a hydrogen reservoir that provides a temporary storage for hydrogen discharged from the cathodes CA in the electrochemical hydrogen pump 100, and a pressure sensor that detects the pressure of hydrogen gas inside the hydrogen reservoir.

It should be noted that these structure of the electrochemical hydrogen pump 100 and various equipment, not illustrated, for a hydrogen supply system are by way of example and are not the only possibilities.

For example, the electrochemical hydrogen pump 100 may have a dead-end structure, in which the pump 100 has no anode gas outlet manifold 30 and no anode gas outlet line 31 and pressurizes at its cathodes CA all hydrogen in the anode gas supplied to its anodes AN through the anode gas inlet manifold 27.

### [Operation]

In the following, an exemplary operation of the electrochemical hydrogen pump 100 in hydrogen pressurization is described with reference to drawings.

The following operation may be carried out as a result of, for example, the processor of a controller, not illustrated, reading a control program stored in a memory in the controller. The involvement of a controller in this operation, however, is optional. The person who operates the pump 100 may undertake part of the operation. In the following, a case is described in which the anode gas to be supplied to the anodes AN in the electrochemical hydrogen pump 100 is a hydrogen-containing gas with steam therein.

First, a low-pressure hydrogen-containing gas is supplied to the anodes AN in the electrochemical hydrogen pump 100. At the same time, a voltage from the voltage applicator 102 is fed to the electrochemical hydrogen pump 100.

At the anode catalyst layer 13 of the anodes AN, hydrogen molecules dissociate into hydrogen ions (protons) and electrons through oxidation (formula (1)). The protons move to the cathode catalyst layer 12 by traveling through the inside of the electrolyte membrane 11. The electrons move to the cathode catalyst layer 12 through the voltage applicator 102.

Then, at the cathode catalyst layer 12, hydrogen molecules are regenerated through reduction (formula (2)). As known, while protons travel through the inside of an electrolyte membrane 11, a particular amount of water moves together with the protons from an anode AN to a cathode CA as electroosmotic water.

During this, the hydrogen (H₂) produced at the cathode CA can be pressurized by increasing the pressure drop in a hydrogen outlet line using a flow controller, not illustrated. An example of a hydrogen outlet line is the cathode gas outlet line 26 illustrated in Fig. 2A. An example of a flow controller is a back pressure valve, regulator valve, or similar device provided in the hydrogen outlet line.

Anode: H₂ (low pressure) → 2H⁺ + 2e⁻ ... (1)

Cathode: 2H⁺ + 2e⁻ → H₂ (high pressure) ... (2)

In such a way, a hydrogen-containing gas is supplied to the anodes AN in the electrochemical hydrogen pump 100, and the hydrogen pump 100 pressurizes the hydrogen in the hydrogen-containing gas at its cathodes CA in response to a voltage applied by the voltage applicator 102. The electrochemical hydrogen pump 100 pressurizes hydrogen in this way, and the hydrogen pressurized at the cathodes CA is, for example, stored in a hydrogen reservoir, not illustrated, temporarily. The hydrogen stored in the hydrogen reservoir is supplied when needed to an entity that requires hydrogen. An example of an entity that requires hydrogen is a fuel cell that uses hydrogen to generate electricity.

### [Raman Spectroscopic Analysis]

In the following, exemplary results of a Raman spectroscopic analysis of a porous carbon sheet 15S in an electrochemical hydrogen pump 100 are described with reference to a drawing.

### <Raman Spectrometer Specifications>

The laser Raman spectroscopic analysis of a porous carbon sheet 15S was carried out using HR-800-UV Raman spectrometer (HORIBA JOBIN YVON), the specifications of which are as follows.
- Spectral range: 400 to 2100 cm⁻¹
- Light source/Wavelength: Ar laser/514 nm
- Laser power: 50 mW (intensity near the laser aperture)
- Laser spot diameter: Approximately 1 µm
- Grating: 600 gr/mm
- Detector: CCD

### <Results of Analysis>

Fig. 4 is a diagram illustrating exemplary results of an analysis by Raman spectroscopy of a porous carbon sheet in an electrochemical hydrogen pump according to Embodiment 1. In the Raman spectrum in Fig. 4, the horizontal axis represents the wavenumber (reciprocal of wavelength) (cm⁻¹) as a unit proportional to energy, and the vertical axis represents the intensity of scattered light.

The Raman spectrum in Fig. 4 was separated into Gaussian components, with the result that the spectrum included a spectrum with a Raman peak around approximately 1600 cm⁻¹ (G band), a spectrum with a Raman peak around approximately 1350 cm⁻¹ (D1 band), a spectrum with a Raman peak around approximately 1500 cm⁻¹ (D2 band), and a spectrum with a Raman peak around approximately 1200 cm⁻¹ (D3 band) as shown in the same drawing.

The G band appears to be a spectrum derived from crystalline carbon. The D1, D2, and D3 bands (hereinafter the D bands) should be derived from amorphous carbon. That is, the inventors believe, the porous carbon sheet 15S contains more amorphous carbon with increasing ratio between the integral of the intensity of scattered light (hereinafter integrated intensity) of the D bands and that of the G band (D (= D1 + D2 + D3) / G).

The integrated intensity of each band was therefore measured. The integrated intensity was 1671 for the G band, 2870 for the D1 band, 853 for the D2 band, and 708 for the D3 band.

The ratio between the integrated intensity of the D bands and that of the G band (D/G) given by this is 2.651. The measurements also indicate that the ratio between the integrated intensity of the D1 band, which corresponds to the characteristic Raman peak among the D bands (around approximately 1350 cm⁻¹), and that of the G band (D1/G) is 1.717.

As shown by this, the porous carbon sheet 15S in the electrochemical hydrogen pump 100 according to this embodiment is of low crystallinity enough that the ratio between the integrated intensity of the D bands and that of the G band (D/G) exceeds "1" (D/G > 1) when the sheet 15S is analyzed by Raman spectroscopy.

Overall, the electrochemical hydrogen pump 100 according to this aspect can cost less in terms of its anode gas diffusion layer 15 than with an anode gas diffusion layer made of metal. At the same time, the risk of the buckling of the anode gas diffusion layer 15 into the anode separator 17 can be reduced.

Specifically, the electrochemical hydrogen pump 100 according to this embodiment offers enhanced rigidity, for example compared with ones having a porous carbon sheet made from carbon fibers, by virtue of having a porous carbon sheet 15S made from a powder molded body.

A porous carbon sheet 15S containing amorphous carbon, furthermore, has relatively few of sharp points observed with metal porous media that have hitherto been used. Even when such a porous carbon sheet 15S is pressed against an electrolyte membrane 11, it is unlikely that the electrolyte membrane 11 is damaged. The electrochemical hydrogen pump 100 according to this embodiment, therefore, offers reduced risk of damage to the electrolyte membrane 11 compared with known ones made with a metal porous medium.

In general, furthermore, amorphous carbon, in which carbon-carbon bonds are in an amorphous structure, is more rigid than carbon in which carbon-carbon bonds are in a crystalline structure. The anode gas diffusion layer 15 in the electrochemical hydrogen pump 100 according to this embodiment is therefore acceptably rigid because the porous carbon sheet 15S in it contains amorphous carbon in such an amount that D/G > 1.0 when the sheet 15S is analyzed by Raman spectroscopy.

In addition, the porous carbon sheet 15S in the electrochemical hydrogen pump 100 according to this embodiment has higher rigidity in its first surface layer 15B, which is closer to the anode separator 17, than in the layer 15A lying under this first surface layer 15B. By virtue of this, the electrochemical hydrogen pump 100 suffers to a lesser degree the deformation of its anode gas diffusion layer 15 caused by a differential pressure (high pressure) that occurs between the cathode CA and anode AN during hydrogen pressurization. For example, the electrochemical hydrogen pump 100 according to this embodiment offers reduced risk of the buckling of the anode gas diffusion layer 15 in the anode gas flow channel 33, which is in the anode separator 17, caused by such a differential pressure.

### (Example 1)

An electrochemical hydrogen pump 100 according to Example 1 is the same as the electrochemical hydrogen pump 100 according to Embodiment 1 except for the structure of the porous carbon sheet 15S, which is described below.

In this example, the porous carbon sheet 15S in the electrochemical hydrogen pump 100 has a lower porosity in its first surface layer 15B, which is closer to the anode separator 17, than in the layer 15A lying under this first surface layer 15B.

This porosity can be determined using, for example, a mercury porosimeter (trade name, AutoPore III 9410; Shimadzu Corporation). With this device, the volume of pores having a diameter of several nm to approximately 500 µm can be measured on the basis of pressure intrusion of mercury into the pores. The pore volume and solid portion in each of the first surface layer 15B and the layer 15A therebeneath give the porosity percentages in these layers.

If the porous carbon sheet 15S is, for example, a sintered body made from carbon particles, reducing the porosity of the porous carbon sheet 15S will increase necking between the carbon particles forming the porous carbon sheet 15S (bonding together of the particles). Hence the rigidity of the porous carbon sheet 15S is improved. The electrochemical hydrogen pump 100 according to this example therefore offers improved rigidity of the first surface layer 15B, which is closer to the anode separator 17, of its porous carbon sheet 15S. As a result, the electrochemical hydrogen pump 100 suffers to a lesser degree the deformation of its anode gas diffusion layer 15 caused by a differential pressure that occurs between the cathode CA and anode AN during hydrogen pressurization. For example, the electrochemical hydrogen pump 100 according to this example offers reduced risk of the buckling of the anode gas diffusion layer 15 in the anode gas flow channel 33, which is in the anode separator 17, caused by such a differential pressure.

Except for these features, the electrochemical hydrogen pump 100 according to this example may be the same as the electrochemical hydrogen pump 100 according to Embodiment 1.

### (Example 2)

An electrochemical hydrogen pump 100 according to Example 2 is the same as the electrochemical hydrogen pump 100 according to Embodiment 1 except for the structure of the porous carbon sheet 15S, which is described below.

In this example, the layer 15A lying under the first surface layer 15B of the porous carbon sheet 15S in the electrochemical hydrogen pump 100 may be an intermediate layer located in the middle of the porous carbon sheet 15S in the direction of thickness as illustrated in Fig. 5. This intermediate layer therefore has lower rigidity than the first surface layer 15B, which is closer to the anode separator 17. The intermediate layer in this case may be made of, for example, carbon in which carbon-carbon bonds are in a crystalline structure. If the porous carbon sheet 15S is, for example, a sintered body made from carbon particles, the intermediate layer may have a higher porosity than the first surface layer 15B.

In this example, furthermore, the porous carbon sheet 15S in the electrochemical hydrogen pump 100 has higher rigidity in its second surface layer 15C, which is closer to the anode catalyst layer 13, than in the layer 15A lying under the second surface layer 15C (intermediate layer) as illustrated in Fig. 5. In this case, the porous carbon sheet 15S may have a lower porosity in its second surface layer 15C, which is closer to the anode catalyst layer 13, than in the layer 15A lying under the second surface layer 15C (intermediate layer).

This porosity can be determined using, for example, a mercury porosimeter (trade name, AutoPore III 9410; Shimadzu Corporation).

If the porous carbon sheet 15S is, for example, a sintered body made from carbon particles, reducing the porosity of the porous carbon sheet 15S will increase necking between the carbon particles forming the porous carbon sheet 15S (bonding together of the particles). Hence the rigidity of the porous carbon sheet 15S is improved. The electrochemical hydrogen pump 100 according to this example therefore offers improved rigidity of the first surface layer 15B, which is closer to the anode separator 17, and the second surface layer 15C, which is closer to the anode catalyst layer 13. As a result, the electrochemical hydrogen pump 100 suffers to a lesser degree the deformation of its anode gas diffusion layer 15 caused by a differential pressure that occurs between the cathode CA and anode AN during hydrogen pressurization. For example, the electrochemical hydrogen pump 100 according to this example offers reduced risk of the buckling of the anode gas diffusion layer 15 in the anode gas flow channel 33, which is in the anode separator 17, caused by such a differential pressure.

Except for these features, the electrochemical hydrogen pump 100 according to this example may be the same as the electrochemical hydrogen pump 100 according to Embodiment 1 or Example 1 of Embodiment 1.

### (Example 3)

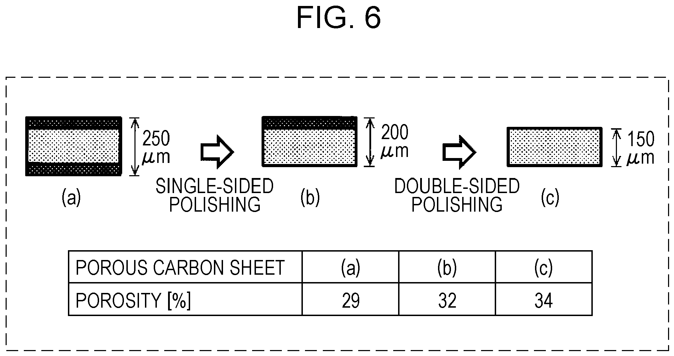

Fig. 6 is a diagram illustrating exemplary measured porosity percentages of the porous carbon sheet in the electrochemical hydrogen pump according to Example 3 of Embodiment 1.

First, in Fig. 6 (a), the porosity of an approximately 250-µm thick porous carbon sheet was measured, for example using a mercury porosimeter (trade name, AutoPore III 9410; Shimadzu Corporation). This porosity was approximately 29%.

Then one primary surface of the porous carbon sheet in Fig. 6 (a) was polished in the direction of thickness to remove approximately 50 µm as illustrated in Fig. 6 (b) (single-sided polishing). In Fig. 6 (b), the porosity of the approximately 200-µm thick porous carbon sheet was measured, for example using a mercury porosimeter (trade name, AutoPore III 9410; Shimadzu Corporation). This porosity was approximately 32%.

Then the other primary surface of the porous carbon sheet in Fig. 6 (b) was polished in the direction of thickness to remove approximately 50 µm as illustrated in Fig. 6 (c) (double-sided polishing). In Fig. 6 (c), the porosity of the approximately 150-µm thick porous carbon sheet was measured, for example using a mercury porosimeter (trade name, AutoPore III 9410; Shimadzu Corporation). This porosity was approximately 34%.

These measured porosity percentages of a porous carbon sheet indicate the porous carbon sheet in Fig. 6 (a) has both a high-porosity intermediate layer and low-porosity surface layers. The porous carbon sheet in Fig. 6 (a), therefore, may be a porous carbon sheet 15S that includes a first surface layer 15B, an inner layer 15A (intermediate layer), and a second surface layer 15C as presented in Example 2 (Fig. 5).

If this porous carbon sheet is, for example, a sintered body made from carbon particles, the high-porosity intermediate layer corresponds to a region with a low density of carbon particles. The low-porosity surface layers correspond to regions with a high density of carbon particles.

In addition, a porous carbon sheet that has different percentages of porosity in its intermediate and surface layers may be a pressurized powder body that has been sintered at a desired temperature and pressure, but this is not the only possibility. Such a porous carbon sheet can also be formed by making the diameter of carbon particles in the surface layers smaller than that in the intermediate layer.

The advantages offered by the electrochemical hydrogen pump 100 according to this example are not described. The advantages are the same as offered by the electrochemical hydrogen pump 100 according to Example 2.

Except for the described features, the electrochemical hydrogen pump 100 according to this example, furthermore, may be the same as the electrochemical hydrogen pump 100 according to any of Embodiment 1 or Example 1 or 2 of Embodiment 1.

### (Example 4)

An electrochemical hydrogen pump 100 according to Example 4 is the same as the electrochemical hydrogen pump 100 according to Embodiment 1 except for the structure of the porous carbon sheet 15S, which is described below.

First, the porosity, flexural strength, and Young's modulus in the direction of thickness of the porous carbon sheet 15S was measured with a compressive strength of 16 MPa or 60 MPa of the porous carbon sheet 15S in the direction of thickness. The results were as follows.

The porosity was measured using a mercury porosimeter (trade name, AutoPore III 9410; Shimadzu Corporation). The flexural strength and Young's modulus were measured by the three-point bend test set forth in JIS R1601 standard "Testing method for flexural strength (modulus of rupture) of fine ceramics" and that in JIS R1602 standard "Testing methods for elastic modulus of fine ceramics," respectively. The measurement of Young's modulus was based on calculation in the flat region of the stress-strain curve obtained in the bend test.

### <Compressive strength of 16 MPa>

- Porosity: 47%
- Flexural strength: 8 MPa
- Young's modulus: 1.5 GPa

### <Compressive strength of 60 MPa>

- Porosity: 33%
- Flexural strength: 30 MPa
- Young's modulus: 13 GPa

The compressive strength of the porous carbon sheet 15S in the direction of thickness and the flexural strength and Young's modulus of the porous carbon sheet 15S appear to be in a strongly linear positive correlation. The compressive strength of the porous carbon sheet 15S in the direction of thickness and the porosity of the porous carbon sheet 15S seem to be in a strongly linear negative correlation.

Based on these, the maximum porosity, minimum flexural strength, and minimum Young's modulus in the direction of thickness at which the porous carbon sheet 15S is unbreakable when the porous carbon sheet 15S has a desired compressive strength (e.g., 20 MPa) in the direction of thickness can be calculated by linear approximation of the measured data above. The calculations give 45%, 10 MPa, and 2.5 GPa, respectively.

That is, in this example, the porous carbon sheet 15S in the electrochemical hydrogen pump 100 may have a Young's modulus in the direction of thickness higher than or equal to 2.5 GPa at least in its first surface layer 15B, which is closer to the anode separator 17. The porous carbon sheet 15S, moreover, may have a flexural strength higher than or equal to 10 MPa at least in its first surface layer 15B, which is closer to the anode separator 17. If these are the case, the porous carbon sheet 15S has a porosity lower than or equal to 45% at least in its first surface layer 15B, which is closer to the anode separator 17. The porous carbon sheet 15S in that case may also have a porosity lower than or equal to 45% at least in its second surface layer 15C, which is closer to the anode catalyst layer 13.

When its porous carbon sheet 15S has a desired compressive strength (e.g., 20 MPa) in the direction of thickness, therefore, the electrochemical hydrogen pump 100 according to this example suffers to a lesser degree the deformation of its anode gas diffusion layer 15 caused by a differential pressure (high pressure) that occurs between the cathode CA and anode AN during hydrogen pressurization than it would if the Young's modulus in the direction of thickness of the first surface layer 15B, which is closer to the anode separator 17, were lower than 2.5 GPa. The electrochemical hydrogen pump 100 according to this example, moreover, suffers to a lesser degree the deformation of its anode gas diffusion layer 15 caused by a differential pressure (high pressure) that occurs between the cathode CA and anode AN during hydrogen pressurization than it would if the flexural strength of the first surface layer 15B, which is closer to the anode separator 17, were lower than 10 MPa. For example, the electrochemical hydrogen pump 100 according to this example offers reduced risk of the buckling of the anode gas diffusion layer 15 in the flow channel 33 in the anode separator 17 caused by such a differential pressure.

An electrochemical hydrogen pump 100 whose porous carbon sheet 15S can withstand a compressive strength of approximately 20 MPa in the direction of thickness finds a broader range of uses than otherwise. For example, the electrochemical hydrogen pump 100 can be used when small hydrogen cylinders for transport, for example by truck, are loaded with hydrogen at approximately 15 MPa. The electrochemical hydrogen pump 100 can also be used when packs of bundled hydrogen cylinders for transport, for example by truck with or without a crane, are loaded with hydrogen at approximately 15 MPa or approximately 20 MPa.

The maximum porosity, minimum flexural strength, and minimum Young's modulus in the direction of thickness at which the porous carbon sheet 15S is unbreakable when the porous carbon sheet 15S has a desired compressive strength (e.g., 40 MPa) in the direction of thickness can also be calculated by linear approximation of the measured data above. The calculations give 39%, 20 MPa, and 7.8 GPa, respectively.

That is, in this example, the porous carbon sheet 15S in the electrochemical hydrogen pump 100 may have a Young's modulus in the direction of thickness higher than or equal to 7.8 GPa at least in its first surface layer 15B, which is closer to the anode separator 17. The porous carbon sheet 15S, moreover, may have a flexural strength higher than or equal to 20 MPa at least in its first surface layer 15B, which is closer to the anode separator 17. If these are the case, the porous carbon sheet 15S has a porosity lower than or equal to 39% at least in its first surface layer 15B, which is closer to the anode separator 17. The porous carbon sheet 15S in that case may also have a porosity lower than or equal to 39% at least in its second surface layer 15C, which is closer to the anode catalyst layer 13.

When its porous carbon sheet 15S has a desired compressive strength (e.g., 40 MPa) in the direction of thickness, therefore, the electrochemical hydrogen pump 100 according to this example suffers to a lesser degree the deformation of its anode gas diffusion layer 15 caused by a differential pressure (high pressure) that occurs between the cathode CA and anode AN during hydrogen pressurization than it would if the Young's modulus in the direction of thickness of the first surface layer 15B, which is closer to the anode separator 17, were lower than 7.8 GPa. The electrochemical hydrogen pump 100 according to this example, moreover, suffers to a lesser degree the deformation of its anode gas diffusion layer 15 caused by a differential pressure (high pressure) that occurs between the cathode CA and anode AN during hydrogen pressurization than it would if the flexural strength of the first surface layer 15B, which is closer to the anode separator 17, were lower than 20 MPa. For example, the electrochemical hydrogen pump 100 according to this example offers reduced risk of the buckling of the anode gas diffusion layer 15 in the anode gas flow channel 33, which is in the anode separator 17, caused by such a differential pressure.

An electrochemical hydrogen pump 100 whose porous carbon sheet 15S can withstand a compressive strength of approximately 40 MPa in the direction of thickness finds a broader range of uses than otherwise. For example, the electrochemical hydrogen pump 100 can be used as a hydrogen compressor at hydrogen stations for forklifts or fuel cell vehicles. Specifically, the electrochemical hydrogen pump 100 can be used when high-pressure hydrogen at approximately 40 MPa is supplied to hydrogen accumulators from hydrogen cylinders filled with hydrogen at approximately 15 MPa.

Except for these features, the electrochemical hydrogen pump 100 according to this example may be the same as the electrochemical hydrogen pump 100 according to any of Embodiment 1 or Examples 1 to 3 of Embodiment 1.

### (Example 5)

An electrochemical hydrogen pump 100 according to Example 5 is the same as the electrochemical hydrogen pump 100 according to Embodiment 1 except for the structure of the porous carbon sheet 15S, which is described below.

In this example, the porous carbon sheet 15S in the electrochemical hydrogen pump 100 has a peak pore diameter smaller than the thickness of the electrolyte membrane 11. The thickness of the electrolyte membrane 11 is between approximately 20 µm and approximately 50 µm for example, but does not need to be this.

This peak pore diameter can be determined using, for example, a mercury porosimeter (trade name, AutoPore III 9410; Shimadzu Corporation). With this device, the distribution of diameters of pores having a diameter of several nm to approximately 500 µm can be measured on the basis of pressure intrusion of mercury into the pores. This distribution of diameters of pores gives the peak pore diameter.

If the peak pore diameter of the porous carbon sheet 15S were larger than or equal to the thickness of the electrolyte membrane 11, the electrolyte membrane 11 could break while the electrochemical hydrogen pump 100 is operating to pressurize hydrogen as a result of the electrolyte membrane 11 falling into a pore in the porous carbon sheet 15S because of a differential pressure that occurs between the cathode CA and anode AN. The electrochemical hydrogen pump 100 according to this example, however, offers reduced risk of such an event by virtue of the peak pore diameter of the porous carbon sheet 15S being smaller than the thickness of the electrolyte membrane 11.

Except for these features, the electrochemical hydrogen pump 100 according to this example may be the same as the electrochemical hydrogen pump 100 according to any of Embodiment 1 or Examples 1 to 4 of Embodiment 1.

### (Example 6)

An electrochemical hydrogen pump 100 according to Example 6 is the same as the electrochemical hydrogen pump 100 according to Embodiment 1 except for the structure of the porous carbon sheet 15S, which is described below.

In this example, the porous carbon sheet 15S in the electrochemical hydrogen pump 100 has an overall porosity higher than or equal to 20%.

This porosity can be determined using, for example, a mercury porosimeter (trade name, AutoPore III 9410; Shimadzu Corporation). With this device, the volume of pores having a diameter of several nm to approximately 500 µm can be measured on the basis of pressure intrusion of mercury into the pores. The overall pore volume and solid portion of the porous carbon sheet 15S give this porosity.

If the overall porosity of the porous carbon sheet 15S were lower than 20%, the diffusibility of the anode gas diffusion layer 15 in diffusing gases into the anode catalyst layer 13 could be insufficient. The electrochemical hydrogen pump 100 according to this example, however, offers sufficient diffusibility of the anode gas diffusion layer 15 in terms of gas diffusion into the anode catalyst layer 13 because the 20% or higher overall porosity of the porous carbon sheet 15S encourages the presence of pores leading to the outside (open holes) in the anode gas diffusion layer 15. By virtue of this, anode gas coming from the anode separator 17 is supplied properly to the anode catalyst layer 13 through the anode gas diffusion layer 15.

Except for these features, the electrochemical hydrogen pump 100 according to this example may be the same as the electrochemical hydrogen pump 100 according to any of Embodiment 1 or Examples 1 to 5 of Embodiment 1.

### (Embodiment 2)

An electrochemical hydrogen pump 100 according to Embodiment 2 is the same as the electrochemical hydrogen pump 100 according to Embodiment 1 except that the second surface layer 15C, which is closer to the anode catalyst layer 13, of its anode gas diffusion layer 15 is water-repellent.

When an electric current flows between an anode AN and a cathode CA in an electrochemical hydrogen pump 100, protons move inside an electrolyte membrane 11 from the anode AN to the cathode CA, bringing water with them. If the operating temperature of the electrochemical hydrogen pump 100 is higher than or equal to a particular temperature, the water that has moved from the anode AN to the cathode CA (electroosmotic water) is present as steam. As the hydrogen gas pressure at the cathode CA becomes higher, however, the percentage of liquid water increases. If liquid water is present in the cathode CA, part of the water is pushed back to the anode AN because of a differential pressure between the cathode CA and anode AN. The amount of water pushed back to the anode AN increases with elevating hydrogen gas pressure at the cathode CA. As the hydrogen gas pressure at the cathode CA increases, therefore, it becomes more likely that the anode AN floods with water pushed back to the anode AN. When such an event of flooding occurs and interferes with gas diffusion at the anode AN, the electrochemical hydrogen pump 100 may become less efficient in hydrogen pressurization because of increased diffusion resistance in the electrochemical hydrogen pump 100.

In this embodiment, to address this, the anode gas diffusion layer 15 in the electrochemical hydrogen pump 100 has a water-repellent second surface layer 15C, which is closer to the anode catalyst layer 13. By virtue of this, water pushed back to the anode AN is drained on a stream of anode gas quickly. Flooding is therefore reduced, and, as a result, adequate gas diffusibility is maintained at the anode AN.

If the anode gas diffusion layer 15 is a sintered body made from carbon particles, a material containing a water-repellent resin, such as a fluoropolymer, may be applied to this sintered body to make the carbon particles in the second surface layer 15C, which is closer to the anode catalyst layer 13, of the anode gas diffusion layer 15 water-repellent. Alternatively, the sintered body may be impregnated with such a material containing a water-repellent resin to make the carbon particles in the second surface layer 15C, which is closer to the anode catalyst layer 13, of the anode gas diffusion layer 15 water-repellent.

An example of a material containing a water-repellent resin is a solution of dispersed fine powder of PTFE in a solvent. An example of how to apply the material containing a water-repellent resin is spray coating.

It should be noted that these methods for formation and structure of a water-repellent second surface layer 15C are by way of example and are not the only possibilities.

Except for these features, the electrochemical hydrogen pump 100 according to this embodiment may be the same as the electrochemical hydrogen pump 100 according to any of Embodiment 1 or Examples 1 to 6 of Embodiment 1.

### (Embodiment 3)

An electrochemical hydrogen pump 100 according to Embodiment 3 is the same as the electrochemical hydrogen pump 100 according to Embodiment 1 except that the first surface layer 15B, which is closer to the anode separator 17, of its anode gas diffusion layer 15 is hydrophilic.

In general, an electrolyte membrane 11 becomes highly proton-conductive under high-temperature and highly humidified conditions (e.g., approximately 60°C), and an electrochemical hydrogen pump 100 becomes more efficient in hydrogen pressurization under such conditions. As stated, when an electric current flows between an anode AN and a cathode CA in an electrochemical hydrogen pump 100, protons move inside an electrolyte membrane 11 from the anode AN to the cathode CA, bringing water with them. Then part of the electroosmotic water, which has moved from the anode AN to the cathode CA, is drained from the cathode CA together with high-pressure hydrogen gas.

If the electric current that flows between the anode AN and cathode CA has increased density, the amount of electroosmotic water increases, and the amount of electroosmotic water drained out of the cathode CA increases accordingly. In that case, the electrochemical hydrogen pump 100 may become less efficient in hydrogen pressurization because the electrolyte membrane 11 in the electrochemical hydrogen pump 100 dries more quickly.

In this embodiment, to address this, the anode gas diffusion layer 15 in the electrochemical hydrogen pump 100 has a hydrophilic first surface layer 15B, which is closer to the anode separator 17. By virtue of this, this first surface layer 15B has a water-retaining function. Water in anode gas can therefore be easily supplied to the electrolyte membrane 11 through the anode gas diffusion layer 15, hence reduced risk of drying up of the electrolyte membrane 11 in the electrochemical hydrogen pump 100.

If the anode gas diffusion layer 15 is a sintered body made from carbon particles, these carbon particles can be made hydrophilic by introducing an oxygen-containing functional group, such as the carboxyl, hydroxyl, or carbonyl group, through treatment, for example with chemicals, electrolytic oxidation, ozone, or oxygen plasma.

It should be noted that these methods for formation and structure of a hydrophilic first surface layer 15B are by way of example and are not the only possibilities.

Except for these features, the electrochemical hydrogen pump 100 according to this embodiment may be the same as the electrochemical hydrogen pump 100 according to any of Embodiment 1, Examples 1 to 6 of Embodiment 1, or Embodiment 2.

Embodiment 1, Examples 1 to 6 of Embodiment 1, Embodiment 2, and Embodiment 3 may be combined unless mutually exclusive. For example, the electrochemical hydrogen pump 100 may have an anode gas diffusion layer 15 whose second surface layer 15C, which is closer to the anode catalyst layer 13, is water-repellent and whose first surface layer 15B, which is closer to the anode separator 17, is hydrophilic.

To those skilled in the art, many improvements to and other embodiments of the present disclosure are apparent from the foregoing description. The foregoing description should therefore be construed only as an illustration and is provided in order to teach those skilled in the art the best mode of carrying out the present disclosure. The details of the structures and/or functions set forth herein can be substantially changed without departing from the spirit of the present disclosure.

### Industrial Applicability

An aspect of the present disclosure is applicable to electrochemical hydrogen pumps that can cost less in terms of their anode gas diffusion layer than with an anode gas diffusion layer made of metal.

### Reference Signs List

- 11:: Electrolyte membrane
- 12:: Cathode catalyst layer
- 13:: Anode catalyst layer
- 14:: Cathode gas diffusion layer
- 15:: Anode gas diffusion layer
- 15A:: Inner layer
- 15B:: First surface layer
- 15C:: Second surface layer
- 15S:: Porous carbon sheet
- 16:: Cathode separator
- 17:: Anode separator
- 21:: Insulator
- 22A:: Anode feed plate
- 22C:: Cathode feed plate
- 23A:: Anode insulating plate
- 23C:: Cathode insulating plate
- 24A:: Anode end plate
- 24C:: Cathode end plate
- 25:: Fastener
- 26:: Cathode gas outlet line
- 27:: Anode gas inlet manifold
- 29:: Anode gas inlet line
- 30:: Anode gas outlet manifold
- 31:: Anode gas outlet line
- 32:: Cathode gas flow channel
- 33:: Anode gas flow channel
- 34:: Cathode gas conduit
- 35:: First anode gas conduit
- 36:: Second anode gas conduit
- 40:: Seal
- 42:: Seal
- 43:: Seal
- 50:: Cathode gas outlet manifold
- 100:: Electrochemical hydrogen pump
- 100A:: Hydrogen pump unit
- 102:: Voltage applicator
- AN:: Anode
- CA:: Cathode

## Claims

1. An electrochemical hydrogen pump comprising:
an electrolyte membrane;
an anode on a first primary surface of the electrolyte membrane;
a cathode on a second primary surface of the electrolyte membrane; and
an anode separator on the anode, wherein
the anode includes an anode catalyst layer on the first primary surface of the electrolyte membrane and an anode gas diffusion layer on the anode catalyst layer, and
the anode gas diffusion layer includes a porous carbon sheet that is a powder molded body.

2. An electrochemical hydrogen pump comprising:
an electrolyte membrane;
an anode on a first primary surface of the electrolyte membrane;
a cathode on a second primary surface of the electrolyte membrane; and
an anode separator on the anode, wherein
the anode includes an anode catalyst layer on the first primary surface of the electrolyte membrane and an anode gas diffusion layer on the anode catalyst layer,
the anode gas diffusion layer includes a porous carbon sheet whose first surface layer, which is closer to the anode separator, contains amorphous carbon, and
wherein the porous carbon sheet is analyzed by Raman spectroscopy, D/G > 1.0.

3. The electrochemical hydrogen pump according to Claim 1 or 2, wherein the porous carbon sheet has a Young's modulus in a direction of thickness higher than or equal to 2.5 GPa at least in a first surface layer, which is closer to the anode separator, thereof.

4. The electrochemical hydrogen pump according to Claim 1 or 2, wherein the porous carbon sheet has a Young's modulus in a direction of thickness higher than or equal to 7.8 GPa at least in a first surface layer, which is closer to the anode separator, thereof.

5. The electrochemical hydrogen pump according to Claim 1 or 2, wherein the porous carbon sheet has a flexural strength higher than or equal to 10 MPa at least in a first surface layer, which is closer to the anode separator, thereof.

6. The electrochemical hydrogen pump according to Claim 1 or 2, wherein the porous carbon sheet has a flexural strength higher than or equal to 20 MPa at least in a first surface layer, which is closer to the anode separator, thereof.

7. The electrochemical hydrogen pump according to any one of Claims 1, 2, 3, and 5, wherein the porous carbon sheet has a porosity lower than or equal to 45% at least in a first surface layer, which is closer to the anode separator, thereof.

8. The electrochemical hydrogen pump according to any one of Claims 1, 2, 4, and 6, wherein the porous carbon sheet has a porosity lower than or equal to 39% at least in a first surface layer, which is closer to the anode separator, thereof.

9. The electrochemical hydrogen pump according to Claim 7, wherein the porous carbon sheet has a porosity lower than or equal to 45% in a second surface layer, which is closer to the anode catalyst layer, thereof.

10. The electrochemical hydrogen pump according to Claim 8, wherein the porous carbon sheet has a porosity lower than or equal to 39% in a second surface layer, which is closer to the anode catalyst layer, thereof.

11. The electrochemical hydrogen pump according to any one of Claims 1 to 10, wherein the porous carbon sheet has higher rigidity in a first surface layer, which is closer to the anode separator, thereof than in a layer lying under the first surface layer.

12. The electrochemical hydrogen pump according to Claim 11, wherein the porous carbon sheet has higher rigidity in a second surface layer, which is closer to the anode catalyst layer, thereof than in a layer lying under the second surface layer.

13. The electrochemical hydrogen pump according to any one of Claims 1 to 12, wherein the porous carbon sheet has a lower porosity in a first surface layer, which is closer to the anode separator, thereof than in a layer lying under the first surface layer.

14. The electrochemical hydrogen pump according to Claim 13, wherein the porous carbon sheet has a lower porosity in a second surface layer, which is closer to the anode catalyst layer, thereof than in a layer lying under the second surface layer.

15. The electrochemical hydrogen pump according to any one of Claims 1 to 14, wherein the porous carbon sheet has a peak pore diameter smaller than a thickness of the electrolyte membrane.

16. The electrochemical hydrogen pump according to any one of Claims 1 to 15, wherein the porous carbon sheet has an overall porosity higher than or equal to 20%.

17. The electrochemical hydrogen pump according to any one of Claims 1 to 16, wherein a second surface layer, which is closer to the anode catalyst layer, of the anode gas diffusion layer is water-repellent.

18. The electrochemical hydrogen pump according to any one of Claims 1 to 17, wherein a first surface layer, which is closer to the anode separator, of the anode gas diffusion layer is hydrophilic.
